# EUROPEAN PATENT APPLICATION

(11) **EP 3 336 742 A1**
(43) Date of publication of application: **20.06.2018**
(21) Application number: 17207257.1
(22) Date of filing: 14.12.2017
(51) Int. Cl.: G06K 7/00, G06K 13/08

(54) **MEMORY CARD READER WITH IMPROVED THUMB SCOOP**

(30) Priority: 19.12.2016 US 201662436055 P
(71) Applicant: THOMSON LICENSING, 92130 Issy les Moulineaux (FR)
(72) Inventor: DERNIER, William, Indianapolis, IN 46290 (US); HUNT, Mickey, Indianapolis, IN 46290 (US)
(74) Representative: Huchet, Anne

(57) **Abstract**

A memory card reader interface (204) with an improved thumb scoop or recess (208) for preventing improper insertion of a memory card (210) is provided. The memory card reader interface (204) of the present disclosure may be formed on a housing (202) of an electronic or host device (200) and includes a memory card slot (206) having an opening (222) in an outer surface of the housing (202) configured to receive a memory card (210) for insertion into the memory card slot (206). A recess (208), also known as a thumb scoop, is configured at the opening (222) of the memory card slot (206) to allow gripping and extraction access to a memory card (210) inside the memory card slot (206). The recess (208) of the memory card interface (204) of the present disclosure is configured in such a manner as to prevent improper insertion of a memory card (210) into the memory card slot (206).

## Description

### TECHNICAL FIELD

The present disclosure generally relates to electronic devices and associated memory card readers, and more particularly, to a memory card reader interface with an improved thumb scoop.

### BACKGROUND

Any background information described herein is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Memory cards, such as Secure Digital (SD) cards, are used with host devices, such as personal computers, set-top boxes and other electronic devices, to store and/or retrieve data. Typically, the memory card fits into a slot in the host device or in a memory card reader attached to the host device. In some host devices, a mechanism is used to lock-in and eject the memory card. In operation, a user pushes the memory card into the slot until the entirety of the memory card is inside the host device, at which point, the memory card "clicks" into a locking position. When the user removes pressure from the memory card, a spring mechanism inside the host device pushes the memory card slightly toward the user, so a small portion of the memory card is exposed from the host device. To eject the memory card from the host device, the user pushes the exposed portion of the memory card further into the slot, which causes the mechanism to disengage from a notch on the memory card and causes a spring inside the host device to eject the memory card from the slot.

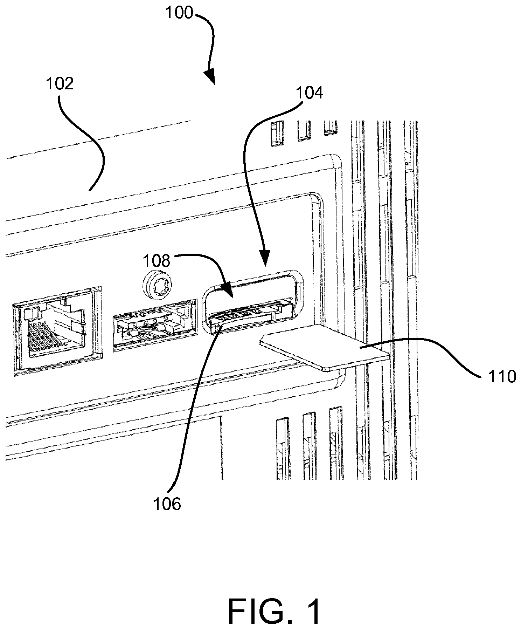

Other host devices do not have a spring-loaded locking-and-ejection mechanism. These devices include a recess portion disposed about the slot to enable a user to grasp and remove the memory card, such as device 100 shown in FIG. 1. Device 100 includes a housing 102 with a card reader interface 104 formed in a wall of the housing 102. The card reader interface 104 includes a card slot 106 and a recess 108 disposed near the slot 106. The slot 106 is configured to receive a memory card 110 and recess 108 is configured to enable a user to insert a finger, e.g., a thumb, to engage an edge of the memory card 110.

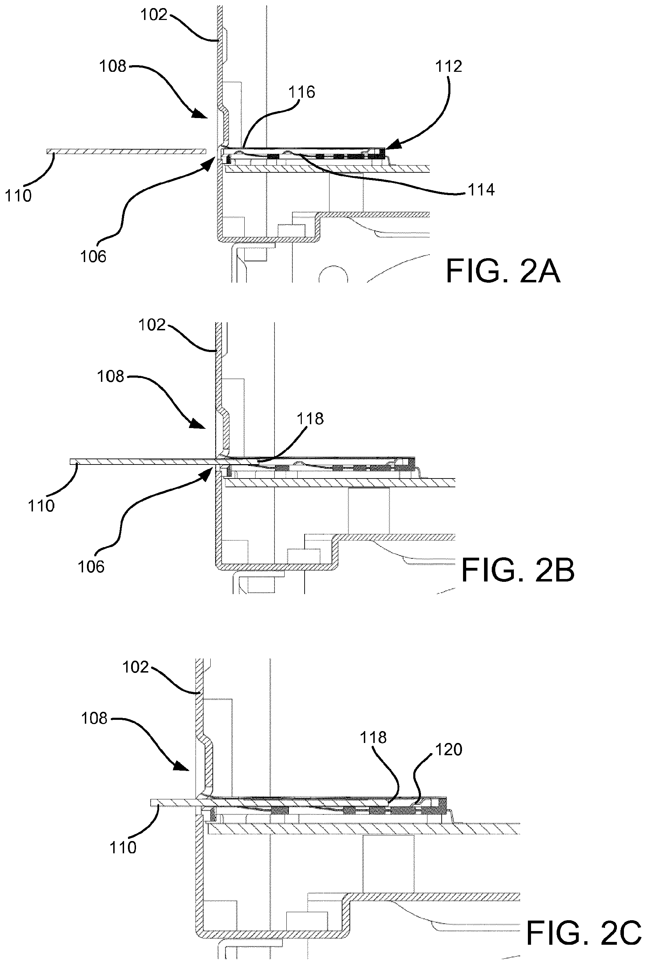

FIGS. 2A-2C illustrates a method for inserting the memory card 110 into the device 100, where in FIGS. 2A-2C the device 100 is shown in cross section. Internal to the housing 102, a memory card connector 112 is arranged behind the slot 106 to receive the memory card 110. The memory card connector 112 includes at least one electrical contact 114 for contacting at least one contact of memory card 110 and a retaining member 116 for urging the card 110 toward the at least one electrical contact 114. Initially, the memory card 110 is aligned with the slot 106 (FIG. 2A) and an edge 118 of the memory card 110 is inserted between the at least one electrical contact 114 and the retaining member 116 (FIG. 2B). The memory card 110 is then pressed into the slot 106 until edge 118 makes contact with a stop 120 (FIG. 2C).

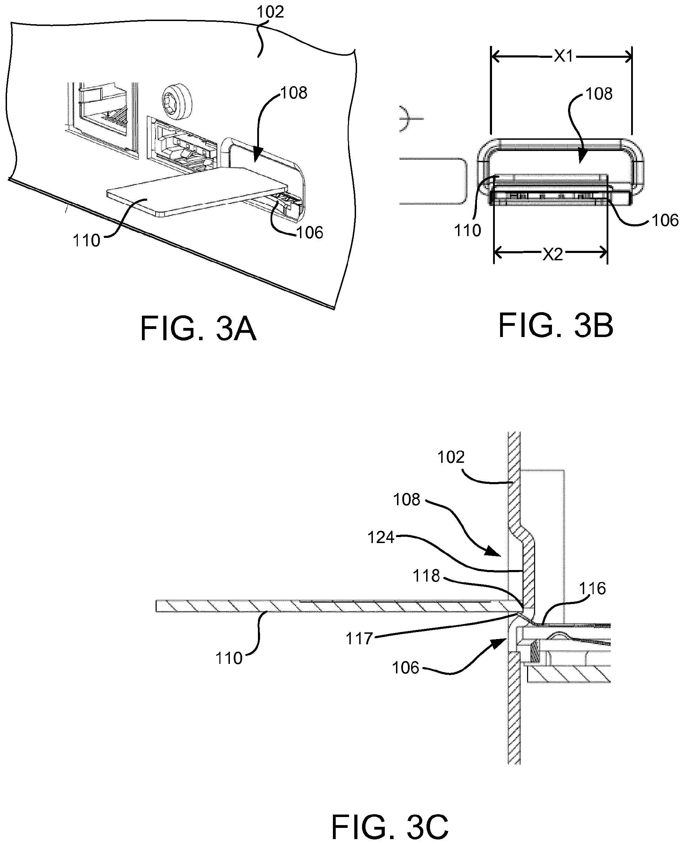

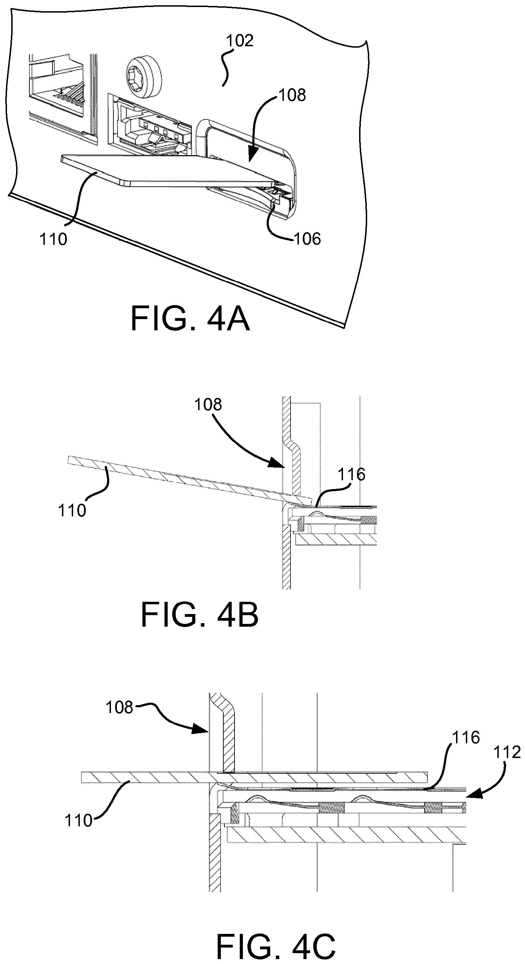

However, due to the construction of recess 108, the memory card 110 may be misaligned with the slot 106 causing the card 110 not to be inserted into the slot 106. Referring to FIGS. 3A-3B, recess 108 has a width X1 that is larger than the width X2 of the memory card 110. This enables the memory card 110 to be misaligned from the slot 106 and pushed until it hits the bottom of the recess 108, as can be seen in FIG. 3C. At this point, the memory card 110 is disposed past an edge 117 of the retaining member 116, such that the memory card 110 makes contact with rear wall 124 of recess 108 and cannot be inserted into the memory card connector 112. Additionally, if the memory card 110 is forced in at an angle as shown in FIGS. 4A and 4B, the memory card 110 may bend the retaining member 116 downward or away from a lower edge of the rear wall 124 of recess 108 creating a space between the edge 117 of retaining member 116 and the lower edge of rear wall 124. Continued inward pressure on memory card 110 by a user may allow the memory card 110 to be inserted improperly above retaining member 116 of memory card connector 112 and into the space between edge 117 and the lower edge of rear wall 124, as shown in FIG. 4C. Such improper insertion may appear to a user to be correct but the memory card and the electronic apparatus will not function properly and the memory card may be damaged and/or impossible to remove.

Therefore, a need exists for an improved memory card reader interface to prevent improper insertion of a memory card into a memory card reader.

### SUMMARY

According to one aspect of the present disclosure, a device is provided including a housing with an outer surface; a memory card slot formed in the housing and having an opening in the outer surface configured to receive a memory card for insertion into the memory card slot, the memory card slot being a first predetermined width; and a recess at the opening of the memory card slot to allow gripping and extraction access to a memory card inserted inside the memory card slot, the recess having a second predetermined width, the second predetermined width being less than the first predetermined width.

In accordance with another aspect of the present principles, an exemplary embodiment comprises apparatus including: a housing with an outer surface; a memory card slot formed in the housing and having an opening in the outer surface configured to receive a memory card for insertion into the memory card slot, the memory card slot being a first width; and a recess at the opening of the memory card slot to allow gripping and extraction access to a memory card inserted inside the memory card slot, the recess having a second width, the second width being less than the first width.

In accordance with another aspect of the present principles, an exemplary embodiment comprises apparatus including: a housing having an outer surface; a memory card slot (206) formed in the housing (202) and having an aperture (222) in the outer surface configured to receive a memory card (210) for insertion into the memory card slot (206), the memory card slot (206) being a first width (W1); a memory card connector (212) arranged behind the memory card slot (206) to receive the memory card (210) and including at least one electrical contact (214) for contacting at least one contact of the memory card (210); and a recess (208) at the opening (222) of the memory card slot (206) to allow gripping and extraction access to a memory card (210) inserted inside the memory card slot (206), the recess (208) having a second width (W2) less than the first width (W1) for blocking at least a portion of a space between the memory card connector (212) and the housing (202), thereby preventing improper insertion of the memory card (210) into the space.

In accordance with another aspect of the present principles, an embodiment of apparatus as described herein may further include: the memory card connector comprising a retaining member for urging the memory card toward the at least one electrical contact and having a first edge; and wherein the recess having a second edge along a portion of the opening of the memory card slot and parallel to the first edge of the retaining member and the space being between the first edge and the second edge.

In accordance with another aspect of the present principles, an exemplary embodiment comprises apparatus including: a housing having an outer surface; a memory card slot formed in the housing and having an aperture in the outer surface configured to receive a memory card for insertion into the memory card slot, the memory card slot being a first width; a memory card connector arranged behind the memory card slot to receive the memory card and including at least one electrical contact for contacting at least one contact of the memory card; a retaining member included in the memory card connector for urging the memory card toward the at least one electrical contact and having a first edge; and a recess in the outer surface of the housing at the aperture to allow gripping and extraction access to the memory card inserted inside the memory card slot and having a second edge along a portion of the opening of the memory card slot and parallel to the first edge of the retaining member, wherein the recess having a second width less than the first width of the memory card slot for blocking at least a portion of a space between the first edge of the retaining member and the second edge of the opening, thereby preventing an improper insertion of the memory card into the space.

In accordance with another aspect of the present principles, an embodiment of apparatus as described herein may further include a plurality of electrical contacts exposed in the memory card slot for engaging corresponding contacts on a memory card when the memory card is inserted inside the memory card slot.

In accordance with another aspect of the present principles, an embodiment of apparatus as described herein may further include a processor coupled to the plurality of electrical contacts exposed in the memory card slot, the processor configured to store data in or retrieve data from the memory card when the contacts on the memory card are engaged with the contacts in the memory card slot.

In accordance with another aspect of the present principles, an embodiment of apparatus as described herein may further include the second width being less than 24 mm.

In accordance with another aspect of the present principles, an embodiment of apparatus as described herein may further include the second width being less than a width of the memory card.

In accordance with another aspect of the present principles, an embodiment of apparatus as described herein may further include the memory card being at least one of a smart card, a Secure Digital (SD) memory card, a MiniSD card with a SD card adapter, a CompactFlash (CF) card, SmartMedia card, MultiMediaCard (MMC) card, an xD Picture card and/or Memory Stick.

In accordance with another aspect of the present principles, an embodiment of apparatus as described herein may further include the recess being perpendicular to a direction of insertion into the memory card slot.

In accordance with another aspect of the present principles, an embodiment of apparatus as described herein may further include at least one portion of the recess being directly adjacent to the opening of the memory card slot.

In accordance with another aspect of the present principles, an embodiment of apparatus as described herein may further include the recess having an edge along a portion of the opening of the memory card slot.

In accordance with another aspect of the present principles, an embodiment of apparatus as described herein may further include the second predetermined width of the recess being defined by a rear wall of the recess, the rear wall being offset from and parallel to the outer surface of the housing.

In accordance with another aspect of the present principles, an embodiment of apparatus as described herein may further include the rear wall being offset from the outer surface of the housing by a convex curved wall portion.

In accordance with another aspect of the present principles, an embodiment of apparatus as described herein may further include the rear wall having an edge along a portion of the opening of the memory card slot.

In accordance with another aspect of the present principles, an exemplary embodiment comprises a memory card reader comprising apparatus according to any embodiment as described herein.

In accordance with another aspect of the present principles, an exemplary embodiment comprises an electronic device comprising one of a set top box, a gateway, or a digital television and including apparatus or a memory card reader according to any embodiment as described herein.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings.
FIG. 1 is a perspective view of a memory card reader interface in accordance with the prior art;
FIGS. 2A-2C illustrates a method for inserting a memory card into the memory card reader of FIG. 1;
FIGS. 3A-C illustrates improper memory card insertion into the memory card reader of FIG. 1;
FIGS. 4A-C illustrates another improper memory card insertion into the memory card reader of FIG. 1;
FIG. 5A is a perspective view of a memory card reader interface in accordance with an embodiment of the present disclosure;
FIG. 5B is a front view of the memory card reader interface shown in FIG. 5A;
FIG. 6 is a cross section view of the memory card reader interface of the present disclosure with a memory card not in alignment;
FIG. 7 is a cross section view of the memory card reader interface of the present disclosure with a memory card in alignment;
FIG. 8 is a cross section view of the memory card reader interface of the present disclosure with a memory card partially inserted; and
FIG. 9 is a cross section view of the memory card reader interface of the present disclosure with a memory card fully inserted.

It should be understood that the drawings are for purposes of illustrating the concepts of the disclosure and is not necessarily the only possible configuration for illustrating the disclosure.

### DETAILED DESCRIPTION

Embodiments of the present disclosure will be described herein below with reference to the accompanying drawings. In the following description, well-known functions or constructions are not described in detail to avoid obscuring the present disclosure in unnecessary detail.

The present description illustrates the principles of the present disclosure. It will thus be appreciated that those skilled in the art will be able to devise various arrangements that, although not explicitly described or shown herein, embody the principles of the disclosure and are included within its spirit and scope.

All examples and conditional language recited herein are intended for instructional purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

The present disclosure is directed to a memory card reader interface with an improved thumb scoop. The memory card reader interface of the present disclosure may be formed on a housing of an electronic device and includes a memory card slot having an opening in an outer surface of the housing configured to receive a memory card for insertion into the memory card slot. A recess, also known as a thumb scoop, is configured at the opening of the memory card slot to allow gripping and extraction access to a memory card inside the memory card slot. The recess of the memory card interface of the present disclosure is configured in such a manner as to prevent improper insertion of a memory card into the memory card slot.

Handheld memory cards are removably connectible with host or electronic devices to store and/or retrieve data. In some environments, the memory card can fit into a slot in the host device or into a memory card reader attached to the host device. The host or electronic device can take any suitable form, such as, but not limited to, a personal computer (PC), a mobile phone, a digital media player, a game device, a personal digital assistant (PDA), a kiosk, a set-top box, a TV system, or a book reader. The memory card comprises a memory, a plurality of electrical contacts that mate with corresponding electrical contacts in the host device, and a controller interfacing between the memory and the plurality of electrical contacts. As used herein, the phrase "in communication with" could mean directly in communication with or indirectly in communication with through one or more components, which may or may not be shown or described herein. The memory in the memory card can take any suitable form. For example, the memory can take the form of solid-state NAND flash memory; however, other forms of memory can be used. The memory card also comprises a housing that encloses the controller and the memory and exposes the plurality of electrical contacts, so that when the memory card is inserted into a memory card slot in a host device, the exposed electrical contacts of the memory card mate with corresponding electrical contacts of the host device.

It is to be appreciated that the memory card may be configured in various formats and/or form factors including, but not limited to, such as a "smart card" (or "chip card" or "integrated circuit card (ICC)") complying with ISO/IEC 7810 or ISO/IEC 7816, a Secure Digital (SD) memory card, a MiniSD card with a SD card adapter, a CompactFlash (CF) card, SmartMedia card, MultiMediaCard (MMC) card, an xD Picture card, Memory Stick, etc.

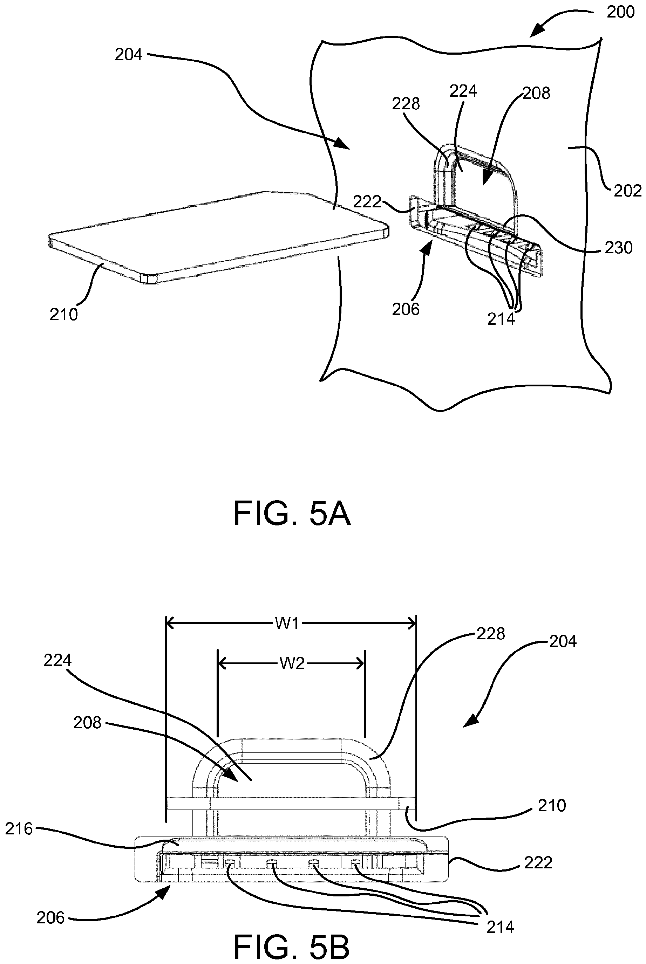

Referring to FIGS. 5A and 5B, a memory card reader interface 204 in accordance with the present disclosure is illustrated. The memory card reader interface 204 is generally formed in a wall of a housing 202 of an electronic or host device 200. The card reader interface 204 includes a card slot 206 and a recess 208 disposed near the slot 206. The slot 206 is configured to receive a memory card 210 and recess 208 is configured to enable a user to insert a finger, e.g., a thumb, to engage an edge of the memory card 210 after the memory card 210 has been inserted into slot 206.

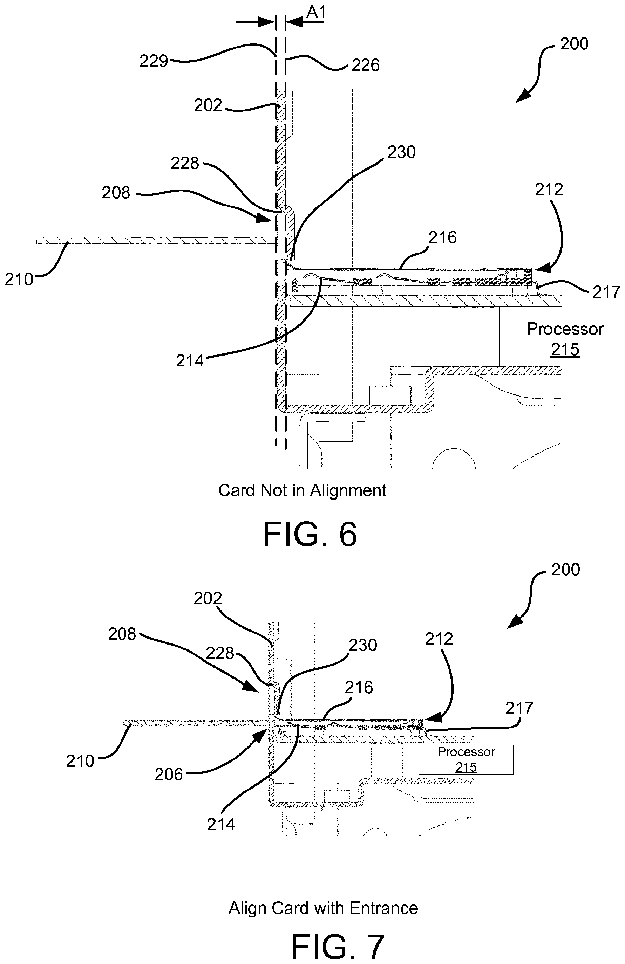

Internal to the housing 202 as shown in FIGS. 6-9, a memory card connector 212 is arranged behind the slot 206 to receive the memory card 210. The memory card connector 212 includes at least one electrical contact 214 for contacting at least one contact of memory card 210 and a retaining member 216 for urging the card 210 toward the at least one electrical contact 214. The electronic or host device further includes a processor 215 coupled to the at the memory card connector via at least one lead 217 and configured to store data in or retrieve data from the memory card 210 when the contacts on the memory card 210 are engaged with the contacts 214 in the memory card connector 212. It is to be appreciated that at least one lead 217 may be coupled to the processor 215 via various means including but not limited to, surface mount connections, through hole connections, a wire lead, etc.

Slot 206 is defined by aperture or opening 222 in a wall of housing 202. Recess 208 extends in a generally perpendicular manner from an edge of the aperture or opening 222. Recess 208 is configured to include a rear wall 224 which is formed in a plane 226 that is parallel to a plane 229 formed by the outer wall or surface of housing 202, which is most clearly shown in FIG. 6. The rear wall 224 is offset from the outer wall or surface of the housing 202 a predetermined distance A1 by a convex curved wall portion 228 which in this exemplary embodiment extends for three sides of the generally rectangular recess 208. The rear wall 224 includes an edge 230 which runs parallel to aperture 222. The recess 208 is configured such that when a memory card 210 is disposed in the slot 206, a thumb or finger of a user may enter the recess 208 so to engage an edge of the memory card 210 to remove the memory card 210 from the slot 206. It is to be appreciated that although the recess 208 is shown in a generally rectangular shape other shapes are contemplated to be within the scope of the present disclosure, e.g., circular, semi-circular, etc.

Referring to FIG. 5B, the recess 208 is configured to prevent improper insertion of the memory card 210. For purposes of illustration, an exemplary memory card 210 is shown as a Secure Digital (SD) card. The dimensions of the SD card 210 are defined by the SD Card Specification to be 32 mm long, 24 mm wide (measurement "W1" in FIG. 5B), and 2.1 mm deep. The rear wall 224 of recess 208 is configured to have width W2 that is less than the width W1 of the memory card 210. For example, width W2 may be less than 24 mm when the memory card reader interface 204 is configured to accept a conventional SD card. In one embodiment, the width W2 may be half of the width W1 for the appropriate memory card employed by the memory card reader interface. It is to be appreciated that the width W2 of the rear wall 224 may vary depending on the memory card the slot 206 is configured to receive, as long as the width W2 of the rear wall 224 of the recess 208 is less than the width W1 of the slot.

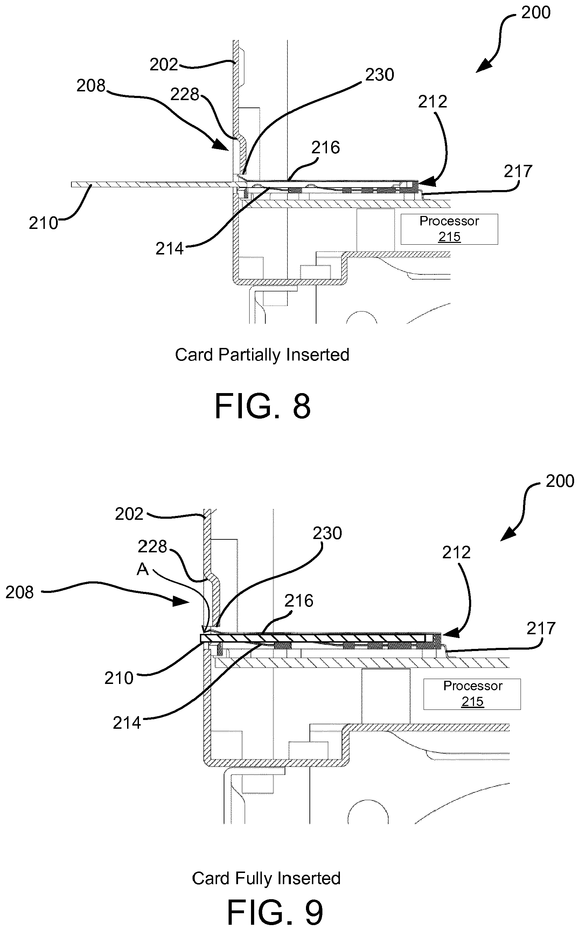

By employing such a configuration, the memory card 210 cannot enter the recess 208 since the width of the memory card 210 is larger than the width of the recess 208 as defined by the rear wall 224, and thus, preventing the memory card 210 from entering into the space above the retaining member 216. That is, the width W2 of the rear wall 224 of the recess 208 being less than the width W1 of the memory card slot 206 blocks at least a portion of the space between the upper edge of retaining member 216 (e.g., edge 117 in FIG. 3C) and the lower edge of the rear wall of the recess (i.e., edge 230 of the rear wall 224 of recess 208 as shown in FIG. 9), thereby preventing improper insertion of the memory card into the recess 208 and into the space between the retaining member 216 and the lower edge of the housing at the memory card slot 206. As shown in FIGS. 5A and 5B, if the memory card 210 is not aligned with the slot 206, the memory card makes contact with the outer surface of the housing 202 that extends from the convex curved wall portion 228 away from the recess 208. The contact of the memory card 210 to the outer surface of the housing 202 provides feedback to a user that the memory card 210 is not aligned with the slot 206. Once the memory card 210 is properly fully inserted into the slot 206, the recess 208 enables a finger of the user to travel along arrow A as shown in FIG. 9 to engage an exposed edge of the memory card 210 to remove the memory card 210 from the slot 206.

It is to be appreciated that the various features shown and described are interchangeable, that is a feature shown in one embodiment may be incorporated into another embodiment.

Although embodiments which incorporate the teachings of the present disclosure have been shown and described in detail herein, those skilled in the art can readily devise many other varied embodiments that still incorporate these teachings. Having described preferred embodiments of a memory card reader interface with an improved thumb scoop. (which are intended to be illustrative and not limiting), it is noted that modifications and variations can be made by persons skilled in the art in light of the above teachings. It is therefore to be understood that changes may be made in the particular embodiments of the disclosure disclosed which are within the scope of the disclosure.

## Claims

1. Apparatus (200) comprising:
a housing (202) with an outer surface;
a memory card slot (206) formed in the housing (202) and having an opening (222) in the outer surface configured to receive a memory card (210) for insertion into the memory card slot (206), the memory card slot (206) being a first width (W1); and
a recess (208) at the opening (222) of the memory card slot (206) to allow gripping and extraction access to a memory card (210) inserted inside the memory card slot (206), the recess (208) having a second width (W2), the second width (W2) being less than the first width (W1).

2. The apparatus (200) of claim 1 further comprising:
a memory card connector (212) arranged behind the memory card slot (206) to receive the memory card (210) and including at least one electrical contact (214) for contacting at least one contact of the memory card (210); and wherein the second width (W2) being less than the first width (W1) for blocking at least a portion of a space between the memory card connector (212) and the housing (202), thereby preventing improper insertion of the memory card (210) into the space.

3. The apparatus of claim 2, wherein
the memory card connector (212) comprises a retaining member (116; 216) for urging the memory card (210) toward the at least one electrical contact (214) and having a first edge (117); and wherein
the recess (208) having a second edge (230) along a portion of the opening (222) of the memory card slot (206) and parallel to the first edge (117) of the retaining member and the space being between the first edge and the second edge.

4. The apparatus (200) of any one of the preceding claims, further comprising:
a plurality of electrical contacts (214) exposed in the memory card slot (206) for engaging corresponding contacts on a memory card (210) when the memory card (210) is inserted inside the memory card slot (206); and
a processor (215) coupled to the plurality of electrical contacts (214) exposed in the memory card slot (206), the processor (215) configured to store data in or retrieve data from the memory card (210) when the contacts on the memory card (210) are engaged with the contacts (214) in the memory card slot (206).

5. The apparatus (200) of any one of the preceding claims, wherein the second width is less than 24 mm.

6. The apparatus (200) of any one of the preceding claims, wherein the second width is less than a width of the memory card (210).

7. The apparatus (200) of any one of the preceding claims, wherein the memory card (210) is at least one of a smart card, a Secure Digital (SD) memory card, a MiniSD card with a SD card adapter, a CompactFlash (CF) card, SmartMedia card, MultiMediaCard (MMC) card, an xD Picture card and/or Memory Stick.

8. The apparatus (200) of any one of the preceding claims, wherein the recess (208) is perpendicular to a direction of insertion into the memory card slot (206).

9. The apparatus (200) of any one of the preceding claims, wherein at least one portion of the recess (208) is directly adjacent to the opening (222) of the memory card slot (206).

10. The apparatus (200) of any one of the preceding claims, wherein the recess (208) includes an edge (230) along a portion of the opening (222) of the memory card slot (206).

11. The apparatus (200) of any one of the preceding claims, wherein the second predetermined width of the recess (208) is defined by a rear wall (224) of the recess (2080, the rear wall (224) being offset from and parallel to the outer surface of the housing (202).

12. The apparatus (200) of any one of the preceding claims, wherein the rear wall (224) is offset from the outer surface of the housing (202) by a convex curved wall portion (228).

13. The apparatus (200) of any one of the preceding claims, wherein the rear wall (224) includes an edge (230) along a portion of the opening (222) of the memory card slot (206).

14. A memory card reader comprising apparatus according to any of the preceding claims.

15. An electronic device comprising one of a set top box, a gateway, or a digital television and including apparatus or a memory card reader according to any of the preceding claims.
